# EUROPEAN PATENT APPLICATION

(11) **EP 4 461 498 A1**
(43) Date of publication of application: **13.11.2024**
(21) Application number: 23172074.9
(22) Date of filing: 08.05.2023
(51) Int. Cl.: B29C 33/10, B29C 33/76, B29C 45/34, B29C 45/33

(54) **INJECTION MOLDING TOOL FOR MOLDING AN EXTERIOR COMPONENT OF A VEHICLE AND METHOD FOR MOLDING AN EXTERIOR COMPONENT OF A VEHICLE**

(71) Applicant: ZKW Group GmbH, 3250 Wieselburg (AT)
(72) Inventor: Holénia, Ján, 95801 Partizánske (SK); Malík, Rastislav, 01362 Vel'ké Rovné (SK); Kucera, Jozef, 83151 Bratislava (SK)
(74) Representative: Patentanwaltskanzlei Matschnig & Forsthuber OG

(57) **Abstract**

The invention relates to an injection molding tool (1) for molding an exterior component of a vehicle,
wherein the injection molding tool (1) comprises a first mold half (11) and a second mold half (12), which second mold half (12) can be positioned onto the first mold half (11) in order to form at least a part of a closed cavity (10) for molding a component (100) that is arranged between the first mold half (11) and the second mold half (12) in a closed state of the injection molding tool (1) and which second mold half (12) can be positioned away from the first mold half (11) in order to form an open cavity for demolding the component (100) in an open state of the injection molding tool (1),
wherein at least one of the mold halves (11, 12) comprises a movable body (30) and a recess (20) to receive the moveable body (30), which movable body (30) has a first surface (31) forming at least a part of the closed cavity (10) in the closed state and a second surface (32) facing the recess (20) without forming a part of the closed cavity (10) in the closed state, whereby the recess (20) has a recess surface (21) that corresponds to at least a part of the second surface (32) of the movable body (30),
wherein the movable body (30) is movably guided in the at least one mold half (11, 12) so as to be moveable between a first and a second position, wherein the first position is directed to the closed state, in which first position the movable body (30) is located inside the recess (20) and the second position is directed to the open state, in which second position the movable body (30) is located at least partially outside the recess (20).

## Description

The invention relates to an injection molding tool for molding an exterior component of a vehicle, wherein the injection molding tool comprises a first mold half and a second mold half, which second mold half can be positioned onto the first mold half in order to form at least a part of a closed cavity for molding a component that is arranged between the first mold half and the second mold half in a closed state of the injection molding tool and which second mold half can be positioned away from the first mold half in order to form an open cavity for demolding the component in an open state of the injection molding tool,
wherein at least one of the mold halves comprises a movable body and a recess to receive the moveable body, which moveable body has a first surface forming at least a part of the closed cavity in the closed state and a second surface facing the recess without forming a part of the closed cavity in the closed state, whereby the recess has a recess surface that corresponds to at least a part of the second surface of the movable body,
wherein the moveable body is moveable guided in the at least one mold half so as to be moveable between a first and a second position, wherein the first position is directed to the closed state, in which first position the movable body is located inside the recess and the second position is directed to the open state, in which second position the movable body is located at least partially outside the recess.

Such an injection molding tool is typical for molding exterior components of vehicles. In recent years, the complexity and quality requirements on exterior components of vehicles have increased. The increasing complexity is accompanied by an increase in the effort required to design and maintain the injection molding tools.

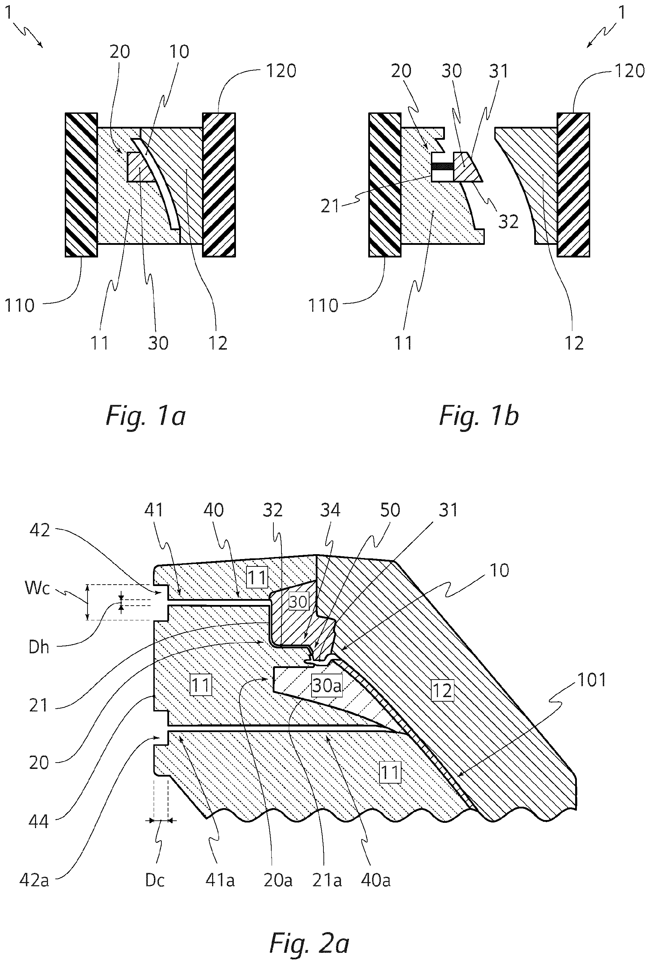

Fig. 1a shows a schematic cross section of the injection molding tool 1 with a first mold half 11 and a second mold half 12. The first mold half 11 is retained by a first clamping frame 110. The second mold half 12 is retained by a second clamping frame 120, which second clamping frame 120 could be a part of a turning plate or rotatory plate with the aim of providing two injection mold stages in order to combine two different molding materials, like a transparent and an opaque material.

The second mold half 12 is positioned on the first mold half 11 in order to form a part of a closed cavity 10. The closed cavity 10 is arranged between the first mold half 11 and the second mold half 12. Thus, when the second mold half 12 is positioned on the first mold half 11, the injection molding tool 1 stays in a closed state. In contrast to this, when the second mold half 12 is positioned away from the first mold half 11, the injection molding tool 1 stays in an open state. Either both or at least one of the mold halves 11, 12 can be moved relative to the other mold half for instance hydraulically with its corresponding clamping frame 110, 120, in order to change the state of the injection molding tool 1 from an open state into a closed state and vice versa.

The open state is shown in Fig. 1b, where the second mold half 12 is positioned away from the first mold half 11, in order to form an open cavity which enables the demolding of a finished molded component.

Such injection molding tools 1 usually form in the closed state multiple of closed cavities (not shown) in order to allow molding of multiple components in one injection molding cycle.

Further, Fig. 1a and Fig. 1b show that the first mold half 11 comprises a movable body 30 and a recess 20 to receive the movable body 30. The movable body 30 has a first surface 31 forming a part of the closed cavity 10 in the closed state and a second surface 32 facing the recess 20 without forming a part of the closed cavity 10 in the closed state. The recess 20 has a recess surface 21 that corresponds to at least a part of the second surface 32 of the movable body 30.

As shown, the movable body 30 is movable guided in the first mold half 11. Fig. 1a shows the movable body 30 in a first position, in which first position the movable body 30 is located inside the recess 20. The first position is directed to the closed state of the injection molding tool 1. Fig. 1b shows the movable body 30 in a second position, in which second position the movable body 30 is located at least partially outside the recess 20. The second position is directed to the open state of the injection molding tool 1. The movement from the first position to the second position can be realized by a mechanical system (not shown), which is for instance coupled to the hydraulic movement of the injection molding tool 1 from the closed state to the open state. The sequence of closed state - injecting mold material - open state - closed state can be considered as one injection molding cycle.

The recess 20 is usually correspondingly shaped to the movable body 30, so that this recess 20 serves as a pocket for the movable body 30 in the closed state of the injection molding tool 1, in which closed state the movable body 30 is in its first position. Therefore, the recess surface 21 corresponds to at least a part of the second surface 32 of the movable body 30. During one injection molding cycle the movable body 30 is moved from the first position to the second position and back to the first position. The inventors found out that a small amount of burned gases is caught in this recess 20 during such an injection molding cycle. In combination with dust or dirt, it happens that these burned gases lead to a bad output of the subsequent injection molding cycle when the burned gases mixed up with dust and dirt are released and retained in the closed cavity 10.

In order to maintain a constant quality of each molded part over the whole tool lifetime, tool cleaning seems to be unavoidable. On the one hand, cleaning reduces the amount of molded parts which do not meet the standard quality requirements, but on the other hand cleaning work requires time and chemicals, which in turn leads to higher costs and longer downtimes of the tool. Especially when it comes to high quality requirements, a typical maintenance interval of an injection molding tool for producing complex parts, for instance a two component mold, could be every 40,000 injection cycles. It is therefore an object of the present invention to improve such an injection molding tool in a way that maintenance time can be shortened, and the amount of chemicals used can be reduced.

The object is achieved by the injection molding tool mentioned at the beginning, whereby the at least one mold half comprises a venting hole penetrating the at least one mold half in such a way that it leads from the recess surface to a venting opening on an outer surface of the one mold half, which outer surface faces away from the recess surface.

By this uncommon positioning of a venting hole, the maintenance intervals can be enlarged, and the amount of chemicals can be reduced to a fraction of what is necessary in an injection molding tool known from the state of the art.

A preferred enhancement includes that the second surface of the movable body and/or the recess surface of the recess comprises a venting groove, which forms a gas path between the recess surface and the second surface in the closed state.

Additionally, the venting hole can be connected to the venting groove in such a way that the gas path formed by the venting groove in the closed state is extended to the outer surface of the one mold half.

Preferably, the venting groove extends from the vicinity of a parting line, which parting line is formed at the junction of the first surface, the second surface and the recess surface, into a direction leading away from the vicinity of the parting line, wherein the closest distance from the venting groove to the parting line in the closed state is between 900 µm and 1,100 µm.

In addition to that, an improved venting can be achieved when the venting groove tapers into the direction of the parting line.

For an improved utilization, the venting opening can open into a venting channel which is formed in the outer surface of the one mold half, which venting channel is formed essentially perpendicular to the longitudinal direction of the venting hole.

A more diverse application can be achieved when a venting hose is connected with its first end to the venting opening and with its second end to a vacuum pump.

Additionally, the venting hose can be retained in the venting channel.

Preferably, the one mold half comprises a plurality of venting holes resulting in a plurality of venting openings on the outer surface of the one mold half, each of which venting openings is connected to the first end of a separate venting hose, whereby all venting hoses are retained in the venting channel and are connected with their second ends to the vacuum pump.

The movable body can be an ejector for ejecting the component in the open state, more precisely during the movement from the first position to the second position, or a slider for releasing an undercut of the component in the open state, more precisely during the movement from the first position to the second position.

In a further aspect the closed cavity can be bounded by at least a part of the first mold half, a part of the second mold half, a part of the first surface of the movable body and a part of a molded transparent component which is retained by the first mold half or the second mold half.

Additionally, the component can be an opaque part of a cover lens for a vehicle lamp, whereby the component joins the molded transparent component.

Moreover, the invention relates to a method for molding an exterior component of a vehicle, comprising the steps of
a) positioning a second mold half onto a first mold half in order to form a closed cavity for molding a component between the second mold half and the first mold half, wherein at least one mold half comprises a movable body and a recess to receive the movable body, which movable body has a first surface forming at least a part of the closed cavity and a second surface facing the recess without forming a part of the closed cavity, whereby the recess has a recess surface that corresponds to at least a part of the second surface of the movable body, wherein the one mold half further comprises a venting hole penetrating the one mold half in such a way that it leads from the recess surface to a venting opening on an outer surface of the one mold half, which outer surface faces away from the recess surface;
b) injecting a mold material into the closed cavity, so that the closed cavity gets filled with the mold material and excess gas is pushed into the portion of the closed cavity, that is next to a parting line formed at the junction of the first surface, the second surface and the recess surface, in such a way that the excess gas escapes through this parting line and the venting hole towards the venting opening during the injection step b);
c) positioning the second mold half away from the first mold half in order to demold the component by moving the movable body from a first position to a second position.

"Excess gas" includes at least either air or burned gas. The burned gas can also originate from previous injection molding cycles. The term "demold" in step c) may additionally or alternatively comprise the step of ejecting.

Preferably, a negative pressure can be applied to the venting opening during the injection of the mold material in step b).

Additionally or alternatively, the negative pressure is applied to the venting opening during the demolding of the component in step c).

"negative pressure" is regarded to the atmospheric pressure. The "negative pressure" can be considered as a vacuum.

The invention is explained in more detail below with reference to exemplary embodiments illustrated in drawings, which show in
Fig. 1a a schematic cross section of an injection molding tool in a closed state,
Fig. 1b a schematic cross section of an injection molding tool in an open state,
Fig. 2a a detailed cross section of a part of an injection molding tool,
Fig. 2b a rear view of the movable body,
Fig. 3 a rear view of the one mold half and in
Fig. 4a to Fig. 4c steps of an injection molding cycle.

The following description refers to the figures in order to explain the invention in more detail. The figures are only exemplary and in simplified representations in order to be able to describe the essential aspects better. Although the reference signs point at similar elements among all the figures for easy comparison and understanding, the elements can appear in different shapes and are not limited to these shapes as long as they fulfill the corresponding functionality.

**Fig. 2a** shows a detailed cross section of an injection molding tool **1**, in which the injection molding tool **1** comprises a first mold half **11** and a second mold half **12.** The second mold half **12** is positioned on the first mold half **11** and forms thereby a part of a closed cavity **10** for molding a component **100** (the component is not shown in this figure). The injection molding tool **1** is therefore within its closed state. The first mold half **11** can be retained by a first clamping frame **110** (not shown in this figure) and the second mold half **12** can be retained by a second clamping frame **120** (not shown in this figure). As shown, the first mold half **11** comprises a movable body **30** and a recess **20** to receive the movable body **30.** The movable body **30** has a first surface **31** forming at least a part of the closed cavity **10.** The recess **20** has a recess surface **21** that corresponds to at least a part of the second surface **32** of the movable body **30.** It is possible that at least 30%, preferably at least 50% of the recess surface **21** corresponds to the second surface **32** of the movable body **30.** Thereby the recess **20** serves as a pocket for the movable body **30**."corresponds" means that the form or geometry of the second surface **32** is similar to the recess surface **21.** In the closed state of the injection molding tool **1**, the closest distance between the recess surface **21** and the second surface **32** of the movable body **30** can be in the range of production tolerances and therefore less than 0.5 mm. Preferably, in the closed state of the injection molding tool **1**, the closest distance between the recess surface **21** and the second surface **32** is at the junction of the first surface **31** of the movable body **30**, the second surface **32** of the movable body **30** and the recess surface **21** of the recess **20.** This junction is called parting line **50** and will be described later.

At this point it should be noted, that preferably no sealing is provided between the second surface **32** of the movable body **30** and the recess surface **21** of the recess **20** in the closed state of the injection molding tool **1.**

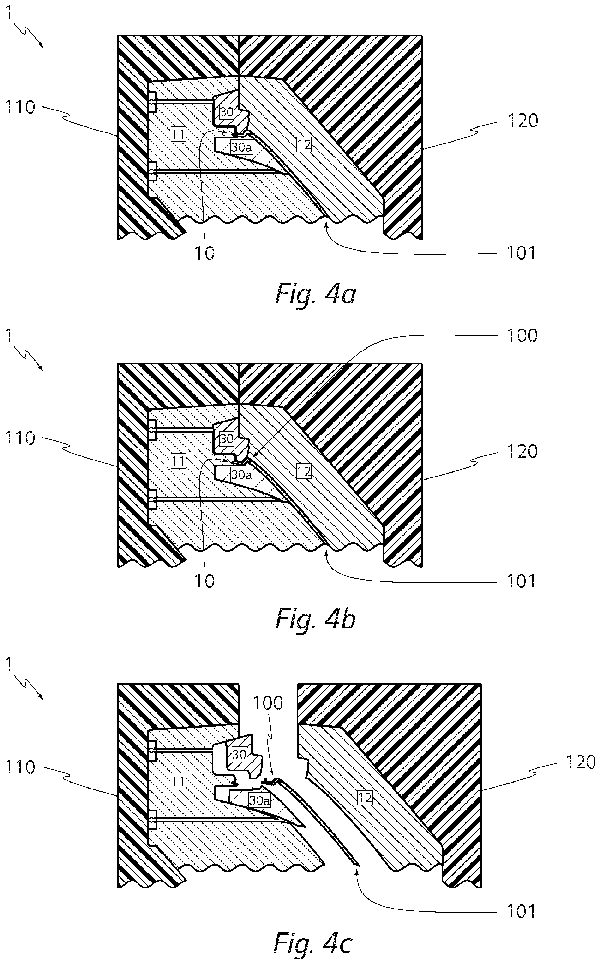

The closed cavity **10** is bounded by a part of the first mold half **11**, a part of the second mold half **12**, a part of the first surface **31** of the movable body **30** and a part of a molded transparent component **101** which is retained by the second mold half **12.** This molded transparent component **101** is therefore a pre-molded component, that has been molded in another cavity and was then transferred via a turning plate system to the shown injection molding tool **1.** Alternatively, the molded transparent component **101** could also be transferred by a rotating plate system. It is clear that it is possible that the first mold half **11** retains a transparent component **101** additionally or alternatively. Especially for a cover lens for a vehicle lamp it is typical that a transparent component **101** is molded first and afterwards an opaque part is molded and adjoins the molded transparent component **101.** Thus, the injection of mold material into the closed cavity **10** form a component **100** (shown in figure 2a and figure 4c), which can be an opaque part and can be part of a cover lens for a vehicle lamp (not shown), whereby the component **100** joins the molded transparent component **101.**

Although the figures and descriptions refer to the first mold half **11**, which comprises the movable body **30** as well the recess **20** to receive the movable body **30**, it is possible that the second mold half **12** comprises additionally or alternatively another movable body and another corresponding recess to receive another movable body.

The movable body **30** is movable guided in the first mold half **11** and remains as shown in its first position. As described at the beginning, the movement from the first position to the second position can be realized by a mechanical system (not shown), which is for instance coupled to the hydraulic movement of the injection molding tool **1** from the closed state to the open state. The sequence of closed state - injecting mold material - open state - closed state can be considered as one injection molding cycle. The first mold half **11** comprises a venting hole **40** penetrating the first mold half **11** in such a way that it leads from the recess surface **21** to a venting opening **41** on an outer surface **44** of the first mold half **11.** This outer surface **44** faces away from the recess surface **21.** The diameter **Dh** of the venting hole **40** can be at least 1 mm, preferably at least 5 mm. This allows excess gas to escape partially from the closed cavity **10** before, during or/and after the injection of the mold material. The venting hole **40** can be made by means of drilling.

The outer surface **44** can be any surface or the total surface that is on the side of the first mold half **11** (the one mold half **11**,**12**) which is opposite to the side that comprises the recess **20** for receiving the movable body **30.** Therefore, the outer surface **44** faces away from the recess surface **21.** Preferably, the outer surface **44** is any surface or the total surface that does not face the first mold half **11** (the other mold half that is not the one mold half **11**, **12**) in the closed state of the injection molding tool **1.**

The second surface **32** of the movable body **30** comprises a venting groove **34.** It is possible that the recess surface **21** of the recess **20** comprises in addition or alternatively a venting groove **34.** By this venting groove **34** a well-defined gas path is formed between the recess surface **21** and the second surface **32** in the closed state of the injection molding tool **1.** Furthermore, it is shown that the venting hole **40** is connected to the venting groove **34** in such a way that the gas path formed by the venting groove **34** in the closed state is extended to the outer surface **44** of the first mold half **11.** This "connection" between the venting hole **40** and the venting groove **34** can also be realized with a defined distance between the bottom of the recess **20** and the movable body **30** by a stop, preferably shaped as a stop collar (not shown) formed either on the movable body 30 or on the recess surface **21.**

As shown, a parting line **50** is formed at the junction of the first surface **31** of the movable body **30**, the second surface **32** of the movable body **30** and the recess surface **21** of the recess **20** in the closed state of the injection molding tool **1.** At this parting line **50** the distance between the recess surface **21** and the second surface **32** of the movable body **30** is the closest and can be in the range of production tolerances and therefore less than 0.5 mm. The venting groove **34** extends from the vicinity of this parting line **50** into a direction leading away from the vicinity of the parting line **50.** As shown, this means that the venting groove **34** does not merge with the closed cavity **10.** Consequently, there is a distance **D** between the venting groove **34** and the parting line **50** in the closed state of the injection molding tool **1.** The distance **D** between the venting groove **34** and the parting line **50** in the closed state is preferably between 900 µm and 1,100 µm, along which distance **D** the distance between the recess surface **21** and the second surface **32** of the movable body **30** is, as mentioned, less than 0.5 mm but not zero. This allows excess gas, like air or burned gas to escape without a flow of molding material through the parting line **50** during injection of the relatively high viscous mold material into the closed cavity **10.** The distance **D** between the venting groove **34** and the parting line **50** in the closed state is the shortest distance between the parting line **50** and the closest point of the venting groove **34**, which closest point has a venting groove **34** minimal depth, which minimal depth is in the range of production tolerances and therefore less than 0.5 mm. In other words, the distance **D** between the venting groove **34** and the parting line **50** is the shortest dimension of an area between the venting groove **34** and the parting line **50**, where the second surface **32** of the moveable body **30** and the recess surface **21** meet with minimal distance, which minimal distance is in the range of production tolerances and therefore less than 0.5 mm.

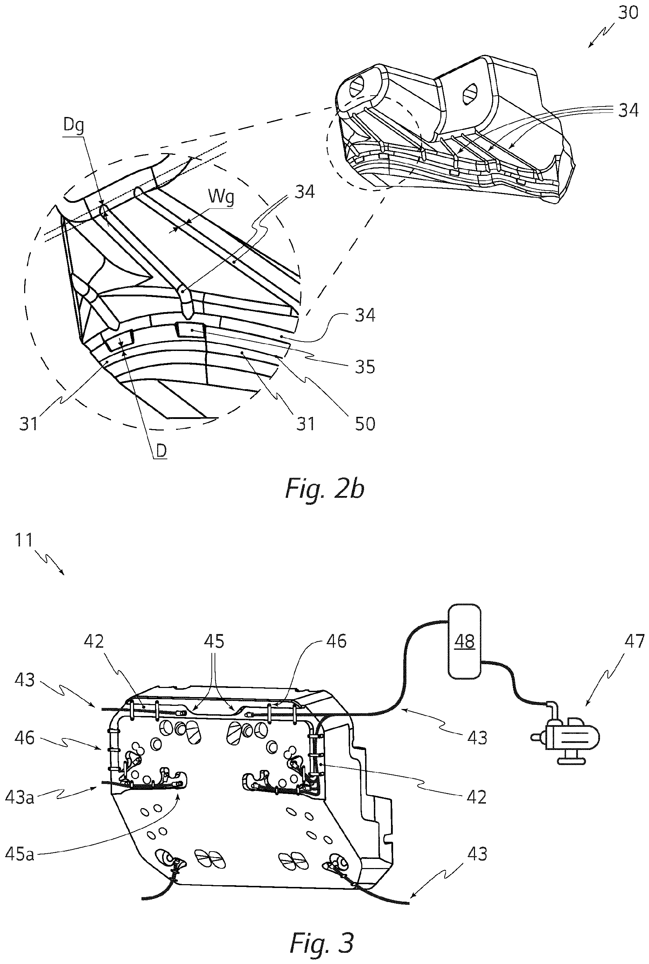

The parting line **50** and the venting groove **34** is shown in detail in Fig. 2b which shows the movable body **30** in a perspective view from the rear side. Several venting grooves **34** can form a venting groove mesh. The venting groove **34** forms thereby a taper **35** into the direction of the parting line **50**, so that the depth **Dg** of the venting groove **34** decreases into the direction of the parting line **50** to a minimal depth, which minimal depth is in the range of production tolerances and therefore less than 0.5 mm. The taper **35** extends over a length of at least 2 mm, preferably at least 5 mm. The distance **D** between the taper **35** of the venting groove **34** and the parting line **50** in the closed state is as mentioned preferably between 900 µm and 1,100 µm in order to allow excess gas, like air or burned gas, to escape without a flow of molding material through the parting line **50** during injection of the relatively high viscous mold material into the closed cavity **10.**

The depth **Dg** of the venting groove **34** can be at least 1 mm, preferably at least 3 mm. The width **Wg** of the venting groove **34** can be at least 1 mm, preferably at least 4 mm and at maximum 10 mm. The venting groove **34** has preferably at least one round form in the cross section perpendicular to the longitudinal extension of the venting groove **34.**

Furthermore, Fig. 2a shows that the venting opening **41** opens into a venting channel **42** which is formed in the outer surface **44** of the first mold half **11.** This venting channel **42** is formed essentially perpendicular to the longitudinal direction of the venting hole **40.** This means that the venting channel **42** extends in a plane that is perpendicular to the longitudinal direction of the venting hole **40.** The venting channel **42** can be formed in the outer surface **44** by a machining process like milling. The venting channel **42** preferably has a rectangular form in the cross section perpendicular to the longitudinal extension of the venting channel **42.** The venting channel **42** can have a width **Wc** of at least 10 mm, preferably between 10 mm and 60 mm. The depth **Dc** of the venting channel **42** can be at least 5 mm, preferably between 5 mm and 30 mm.

The first mold half **11** comprises a further movable body **30a** and a further recess **20a** for receiving the further movable body **30a.** All the mentioned features of the movable body **30** and the recess **20** for receiving the movable body **30** are met for the further movable body **30a** and the further recess **20a** for receiving the further movable body **30a.** Therefore, the first mold half **11** comprises a further venting hole **40a** penetrating the first mold half **11** in such a way that it leads from the further recess surface **21a** to a further venting opening **41a** on the outer surface **44** of the one mold half **11.**

It is common that a mold half **11**, **12** comprises several movable bodies **30**, **30**a. The movable body **30** is in this embodiment an ejector for releasing an undercut of the component **100** and ejecting of the component **100** in the open state, more precisely during the movement from the first position to the second position. The further movable body **30a** is in this embodiment showing a second ejector for ejecting the component **100** in the open state, more precisely during the movement from its first position to its second position. Although only ejectors are shown in the embodiment, at least one of the moveably bodies **30**, **30a** can be a slider too.

**Fig. 3** shows a rear view of the injection molding tool **1** in the closed state without the clamping frames. Several venting openings **41**, **41a** open into the venting channel **42** which is formed in the outer surface **44** of the first mold half **11.** Therefore, several venting holes **40**, **40a** are penetrating the first mold half **11.** Each venting opening **41**, **41a** is connected to the first end of a venting hose **43**, **43a.** The second end of each venting hose **43**, **43a** is connected to a vacuum pump **47**, which vacuum pump **47** is preferably externally placed with regard to the injection molding tool **1** and can generate negative atmospheric pressure. In the connection between the vacuum pump **47** and the venting openings **41**, **41a** via the venting hose **43**, **43a** an air filter **48** is provided. Each venting hole **40**, **40a** is connected via a hose connector **45**, **45a** to the first end of a corresponding venting hose **43**, **43a**. The hose connector **45**, **45a** can be formed as an L hose connector.

Therefore, the venting hole **40** described previously is connected via a hose connector **45** to the first end of a venting hose **43**, whereby the second end of the venting hose **43** is connected to the vacuum pump **47.** This leads to an extension of the well-defined gas path formed by the venting groove **34** via the venting hole **40** and the corresponding hose connector **45** via the venting hose **43** to the vacuum pump **47** in order to provide negative pressure to the vicinity of the parting line **50** and therefore to improve at least partially the ventilation of the whole gas path before, during or/and after the injection of the mold material into the closed cavity **10.**

The venting hoses **43**, respectively each of the several venting hoses **43**, **43a** are retained in the venting channel **42**, preferably by means of metallic retain plates **46.** These metallic retain plates **46** can be screwed onto the outer surface **44** of the first mold half **11** such that the venting hoses **43**, **43a** are secured in the venting channel **42.**

**Fig. 4a** to **Fig. 4c** show the steps of an injection molding cycle and a method for molding an exterior component of a vehicle. The shown cross section corresponds to the cross section of the injection molding tool **1** described in Fig. 2a, whereby in addition, the clamping frame **110** which retains the first mold half **11** and the second clamping frame **120** which retains the second mold half **12**, is shown. The first step of the method involves the positioning of the second mold half **12** onto the first mold half **11** in order to form a closed cavity **10** as shown in **Fig. 4a****.** The second mold half **12** retains a molded transparent component **101.**

In the next step, shown in **Fig. 4b**, mold material is injected into the closed cavity **10**, so that the closed cavity **10** gets filled with the mold material. In this step, excess gas like air or burned gas is pushed into the portion of the closed cavity **10** that is next to the parting line **50.** This causes the excess gas to escape through the parting line **50** and the venting hole **40** towards the venting opening **41** during this injection step. This is possible due to the previously mentioned minimal distance between the second surface **32** of the moveable body **30** and the recess surface **21**, whereby the minimal distance is in the range of production tolerances and therefore less than 0.5 mm but not zero.

This can be enhanced by providing the previously mentioned venting groove **34** on the second surface **32** of the movable body **30** and/or on the recess surface **21** of the recess **20.** The detailed structure of the whole well-defined gas path was already described in accordance with Fig. 2a and Fig. 2b. Therefore, it will not be mentioned here again.

After curing, the method involves the step of positioning the second mold half **12** away from the first mold half **11** as shown in Fig. 4c. During this step the movable body **30** is moved from the first position to the second position. After this step, the injection molding tool **1** is in its open state and the second mold half **12** is positioned away from the first mold half **11** in order to demold the previously molded component **100** by moving the movable body **30** from the first position to the second position.

More specifically, as shown, the movable body **30** acts as an ejector for releasing an undercut of the component **100** and ejecting it by moving from the first position to the second position. The further movable body **30a** acts as a second ejector for ejecting the component by moving from its first position to its second position.

During the step of injecting mold material into the closed cavity **10**, negative pressure can be applied to the venting opening **41.**

Alternatively, or preferably additionally, negative pressure is applied to the venting opening **41** during the demolding of the component **100.**

"negative pressure" is regarded to the atmospheric pressure.

The invention is not limited to the examples given in this description. The scope of protection is outlined by the claims that follow.

### LIST OF REFERENCE SIGNS

- 1: molding tool
- 10: cavity
- 11: first mold half
- 12: second mold half
- 20, 20a: recess
- 21: recess surface
- 30, 30a: movable body
- 31: first surface
- 32: second surface
- 34: venting groove
- Dg: depth of the venting groove
- Wg: width of the venting groove
- 35: taper of the venting groove
- D: distance between the venting groove and the parting line
- 40, 40a: venting hole
- Dh: diameter of the venting hole
- 41, 41a: venting opening
- 42, 42a: venting channel
- Wc: width of the venting channel
- Dc: depth of the venting channel
- 43, 43a: venting hose
- 44: outer surface
- 45: hose connector
- 46: retain plates
- 47: vacuum pump
- 48: air filter
- 50: parting line
- 100: component
- 101: transparent component
- 110: first clamping frame
- 120: second clamping frame

## Claims

1. Injection molding tool (1) for molding an exterior component of a vehicle,
wherein the injection molding tool (1) comprises a first mold half (11) and a second mold half (12), which second mold half (12) can be positioned onto the first mold half (11) in order to form at least a part of a closed cavity (10) for molding a component (100) that is arranged between the first mold half (11) and the second mold half (12) in a closed state of the injection molding tool (1) and which second mold half (12) can be positioned away from the first mold half (11) in order to form an open cavity for demolding the component (100) in an open state of the injection molding tool (1),
wherein at least one of the mold halves (11, 12) comprises a movable body (30) and a recess (20) to receive the moveable body (30), which movable body (30) has a first surface (31) forming at least a part of the closed cavity (10) in the closed state and a second surface (32) facing the recess (20) without forming a part of the closed cavity (10) in the closed state, whereby the recess (20) has a recess surface (21) that corresponds to at least a part of the second surface (32) of the movable body (30),
wherein the movable body (30) is movably guided in the at least one mold half (11, 12) so as to be moveable between a first and a second position, wherein the first position is directed to the closed state, in which first position the movable body (30) is located inside the recess (20) and the second position is directed to the open state, in which second position the movable body (30) is located at least partially outside the recess (20),
**characterized in that,**
the at least one mold half (11, 12) comprises a venting hole (40) penetrating the at least one mold half (11, 12) in such a way that it leads from the recess surface (21) to a venting opening (41) on an outer surface (44) of the one mold half (11, 12), which outer surface (44) faces away from the recess surface (21).

2. Injection molding tool (1) according to claim 1, **characterized in that** the second surface (32) of the movable body (30) and/or the recess surface (21) of the recess (20) comprises a venting groove (34), which forms a gas path between the recess surface (21) and the second surface (32) in the closed state.

3. Injection molding tool according to claim 2, **characterized in that** the venting hole (40) is connected to the venting groove (34) in such a way that the gas path formed by the venting groove (34) in the closed state is extended to the outer surface (44) of the one mold half (11, 12).

4. Injection molding tool according to one of the claims 2 or 3, **characterized in that** the venting groove (34) extends from the vicinity of a parting line (50), which parting line (50) is formed at the junction of the first surface (31), the second surface (32) and the recess surface (21), into a direction leading away from the vicinity of the parting line (50), wherein the closest distance from the venting groove (34) to the parting line (50) in the closed state is between 900 µm and 1,100 µm.

5. Injection molding tool according to claim 4, **characterized in that** the venting groove (34) tapers into the direction of the parting line (50).

6. Injection molding tool according to any of the preceding claims, **characterized in that** the venting opening (41) opens into a venting channel (42) which is formed in the outer surface (44) of the one mold half (11, 12), which venting channel (42) is formed essentially perpendicular to the longitudinal direction of the venting hole (40).

7. Injection molding tool according to claim 6, **characterized in that** a venting hose (43) is connected with its first end to the venting opening (41) and with its second end to a vacuum pump (47).

8. Injection molding tool according to claim 7, **characterized in that** the venting hose (43) is retained in the venting channel (42).

9. Injection molding tool according to claim 7 or claim 8, **characterized in that** the one mold half (11, 12) comprises a plurality of venting holes (40) resulting in a plurality of venting openings (41) on the outer surface (44) of the one mold half (11, 12), each of which venting openings (41) is connected to the first end of a separate venting hose (43), whereby all venting hoses (43) are retained in the venting channel (42) and are connected with their second ends to the vacuum pump (47).

10. Injection molding tool according to any of the preceding claims, **characterized in that** the movable body (30) is an ejector for ejecting the component (100) in the open state or a slider for releasing an undercut of the component (100) in the open state.

11. Injection molding tool according to any of the preceding claims, **characterized in that** the closed cavity (10) is bounded by at least a part of the first mold half (11), a part of the second mold half (12), a part of the first surface (31) of the movable body (30) and a part of a molded transparent component (101) which is retained by the first mold half (11) or the second mold half (12).

12. Injection molding tool according to claim 11, **characterized in that** the component (100) is an opaque part of a cover lens for a vehicle lamp, whereby the component (100) joins the molded transparent component (101).

13. Method for molding an exterior component of a vehicle, comprising the steps of
**a)** positioning a second mold half (12) onto a first mold half (11) in order to form a closed cavity (10) for molding a component (100) between the second mold half (12) and the first mold half (11), wherein at least one mold half (11,12) comprises a movable body (30) and a recess (20) to receive the movable body (30), which movable body (30) has a first surface (31) forming at least a part of the closed cavity (10) and a second surface (32) facing the recess (20) without forming a part of the closed cavity (10), whereby the recess (20) has a recess surface (21) that corresponds to at least a part of the second surface (32) of the movable body (30), wherein the one mold half (11, 12) further comprises a venting hole (40) penetrating the one mold half (11) in such a way that it leads from the recess surface (21) to a venting opening (41) on an outer surface (44) of the one mold half (11, 12), which outer surface (44) faces away from the recess surface (21);
**b)** injecting a mold material into the closed cavity (10), so that the closed cavity (10) gets filled with the mold material and excess gas is pushed into the portion of the closed cavity (10), that is next to a parting line (50) formed at the junction of the first surface (31), the second surface (32) and the recess surface (21), in such a way that the excess gas escapes through this parting line (50) and the venting hole (40) towards the venting opening (41) during the injection step b);
**c)** positioning the second mold half (12) away from the first mold half (11) in order to demold the component (100) by moving the moveable body (30) from a first position to a second position.

14. Method for molding according to claim 13, **characterized in that** a negative pressure is applied to the venting opening (41) during the injection of the mold material in step b).

15. Method for molding according to claim 13 and/or claim 14, **characterized in that** a negative pressure is applied to the venting opening (41) during the demolding of the component (100) in step c).
